# EUROPEAN PATENT APPLICATION

(11) **EP 4 664 677 A1**
(43) Date of publication of application: **17.12.2025**
(21) Application number: 25181829.0
(22) Date of filing: 10.06.2025
(51) Int. Cl.: H01Q 1/27, H01Q 1/52, H01Q 5/35

(54) **DIPLEXER TUNING MODULE WITH APERTURE TUNING FOR BROADBAND MULTI-PORT ANTENNAS**

(30) Priority: 10.06.2024 US 202418738911
(71) Applicant: GOOGLE LLC, Mountain View CA 94043 (US)
(72) Inventor: Yang, Zhenchao, Mountain View, 94043 (US); Wang, Zheyu, Mountain View, 94043 (US); Li, Pei, Mountain View, 94043 (US)
(74) Representative: Maikowski & Ninnemann Patentanwälte Partnerschaft mbB

(57) **Abstract**

A computing device is provided that includes a single, multi-port antenna that allows for simultaneous communication across two or more frequency bands. Such an arrangement can solve the problem of limited spatial volume within the cavity of the housing for additional antennas. The presence of a diplexer tuning module in combination with aperture tuning components allows for a single antenna structure to support multiple frequency bands with a cost effective hardware solution and efficiency with respect to available space for such hardware. In this regard, the multi-port (e.g., two-port) antenna of the present disclosure can support multiple frequency bands simultaneously, including, but not limited to long-term evolution (LTE), Wideband Code Division Multiple Access (WCDMA), GPS, n255, Wi-Fi 2.4, Wi-Fi 5G, Wi-Fi 6E, Bluetooth, and ultra-wideband (UWB) for wide area networks and local area networks.

## Description

### FIELD

The present disclosure relates generally to computing devices that utilize an antenna with two or more ports. More particularly, the present disclosure relates to a computing device that utilizes aperture tuning to allow for a computing device, such as a wearable computing device, that supports multiple frequency bands.

### BACKGROUND

A computing device (e.g., a wearable computing device such as a wristwatch, ring, band, etc. or a non-wearable computing device such as a smartphone or tablet) can wirelessly communicate with other computing devices over a variety of wireless communication standards, such as long-term evolution (LTE), Wideband Code Division Multiple Access (WCDMA), global positioning system (GPS), n255, Wi-Fi 2.4, Wi-Fi 5G, Wi-Fi 6E, Bluetooth, ultra-wideband (UWB), and the like. The wireless communication standards can cover a variety of frequency bands. The computing device can include one or more antennas for such wireless communication.

The use of one antenna for communication over every wireless communication standard can be difficult. For example, given the small size and spatial volume of many computing devices, and wearable computing devices in particular, there may only be sufficient space for one antenna. Meanwhile, various carriers and providers of wireless communication services can require certain connectivity standards from the wearable computing device that may be difficult to meet when using only one antenna to wirelessly communicate. To solve this problem, the same antenna is often reused by feeding at different locations to provide additional freedom to support other frequency bands. However, the sharing of a very limited number of antenna ports for multiple frequency bands leads to a complicated and lossy RF front-end (RFFE) architecture.

Additionally, accessories for the computing device (e.g., metal bands for wearing the computing device around the wrist or covers for a smartphone or tablet), and the like can also change radiation patterns of an antenna and cause sensitivity degradation.

Moreover, the small size of many computing devices can make adding additional antennas difficult. Specifically, there is an extremely small volume available to antennas the smaller a device's footprint is. Additionally, the extremely small clearance between antennae, surrounding modules, and metal enclosures requires precise antenna clearances adjacent to metal components to maintain efficient antenna radiation performance in terms of efficiency and bandwidth. Typical solutions involve increasing the device size or decreasing the size of inner modules such as the battery, neither of which are desired.

Further, as more health sensor features are incorporated into wearable computing devices, it is critical that the design of the device maximizes the efficiency of the antenna components to allow for more room for additional sensor functionality.

As such, a need exists for an antenna design that can accommodate numerous communication bands in a small volume of space associated with many computing devices, such as wearable computing devices.

### SUMMARY

Aspects and advantages of embodiments of the present disclosure will be set forth in part in the following description, or can be learned from the description, or can be learned through practice of the embodiments.

In one aspect, the present disclosure is directed to a wearable computing device. The device includes a housing; a display positioned within the housing; a circuit board positioned within the housing, the circuit board electrically coupled to the display; and an antenna positioned within the housing, the antenna including: a first port configured to facilitate communication of the antenna over a first frequency band; and a second port configured to facilitate communication of the antenna over a second frequency band. The device also includes a diplexer tuning module configured to separate the first frequency band and the second frequency band; a first aperture tuning component associated with the first port, wherein the first aperture tuning component facilitates tuning of the second frequency band; and a second aperture turning component associated with the second port, wherein the second aperture tuning component facilitates tuning of the first frequency band.

In another aspect, the first frequency band can fall within a range that includes frequencies less than about 3 Gigahertz, and the second frequency band can fall within a range that includes frequencies greater than about 5 Gigahertz.

In one more aspect, the antenna can be configured to communicate over the first frequency band and the second frequency band simultaneously.

In still another aspect, the first frequency band and the second frequency band can support a plurality of wireless communication standards, wherein the plurality of wireless communication standards can include long-term evolution (LTE), Wideband Code Division Multiple Access (WCDMA), global positioning system (GPS), n255,Wi-Fi 2.4, Wi-Fi 5G, Wi-Fi 6E, Bluetooth, and ultra-wideband (UWB).

In yet another aspect, the first frequency band can support communication via LTE, Wideband Code Division Multiple Access (WCDMA), GPS, Bluetooth, n255, or Wi-Fi 2.4.

In an additional aspect, the second frequency band can support communication via Wi-Fi 5G, Wi-Fi 6E, or UWB.

In an additional aspect, the diplexer tuning module can include a first diplexer tuning sub-module associated with the first port and the first frequency band and a second diplexer tuning module associated with the second port and the second frequency band.

Further, the wearable computing device can include a neutralizing bridge configured to isolate signals associated with the first port from signals associated with the second port.

In one more aspect, the wearable computing device can include a first matching circuit associated with the first port and a second matching circuit associated with the second port.

Further, in one aspect, the antenna can be a slot antenna, a monopole antenna, or a loop antenna.

In one more aspect, the wearable computing device of can include one or more electrodes for measuring a biometric parameter of a user.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts a computing device according to some implementations of the present disclosure.
FIG. 2 depicts a conductive housing of a computing device according to some implementations of the present disclosure.
FIG. 3 depicts a side view of a computing device with a bottom cover of a housing assembly of the computing device removed according to some implementations of the present disclosure.
FIG. 4 depicts the side view of a computing device with a housing assembly of the computing device removed according to some implementations of the present disclosure.
FIG. 5 depicts an antenna defined by a gap between a conductive housing and a printed circuit board of a computing device according to some implementations of the present disclosure.
FIG. 6 depicts a block diagram of components of a computing device according to some implementations of the present disclosure.
FIG. 7 depicts a block diagram of components of a computing device according to some implementations of the present disclosure.
FIG. 8 depicts a flow diagram of a method for utilizing a sensor for monitoring biometric data and an antenna for wireless data transmission simultaneously according to some implementations of the present disclosure.

Reference numerals that are repeated across plural figures are intended to identify the same features in various implementations.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

Example aspects of the present disclosure are directed to a wearable computing device that can be worn, for instance, on a user's wrist. However, it is to be understood that other wearable computing devices are also contemplated, such as, but not limited to, a phone, a tablet, a band, a ring, etc. In addition, the present disclosure also contemplates implementing example aspects of the present disclosure in non-wearable devices, such as smartphones or tablets, which may also have limited spatial volume. The wearable computing device typically can include a housing and one or more internal antennas disposed within a cavity defined by the housing. In this manner, the wearable computing device can communicate with external devices (e.g., smartphones, tablets, etc.). However, the use of only internal antennas in wearable computing devices can risk not meeting carrier specifications for covering all communication frequency bands (especially low-band long-term evolution ("LTE") frequency bands), can cause antenna desensitivity, can cause interference with other functionality of wearable computing devices, and can limit wireless transmission of data to space restraints associated with the small internal footprint of wearable devices.

As such, the computing device according to the present disclosure contemplates a multi-port single antenna structure that allows for simultaneous communication across two or more frequency bands. Such an arrangement can solve the problem of limited spatial volume within the cavity of the housing for additional antennas. The presence of a diplexer tuning module in combination with aperture tuning allows for a single antenna structure to support multiple frequency bands with a cost effective hardware solution and efficiency with respect to available space for such hardware. In this regard, the multi-port (e.g., two-port) antenna of the present disclosure can support multiple frequency bands simultaneously, including, but not limited to long-term evolution (LTE), Wideband Code Division Multiple Access (WCDMA), GPS, n255, Wi-Fi 2.4, Wi-Fi 5G, Wi-Fi 6E, Bluetooth, and ultra-wideband (UWB) for wide area networks and local area networks. Further, in some embodiments, the present disclosure contemplates a multi-port antenna where a first port is configured to facilitate communication over a first frequency band, while a second port is configured to facilitate communication over a second frequency band simultaneously, where the first frequency band is different from the second frequency band. For instance, the first frequency band can fall within a range that includes frequencies less than about 3 Gigahertz, while the second frequency band can fall within a range that includes frequencies greater than about 5 Gigahertz. Specifically, the first frequency band can support communication via LTE, Wideband Code Division Multiple Access (WCDMA), GPS, Bluetooth, n255, or Wi-Fi 2.4, while the second frequency band can simultaneously support communication via Wi-Fi 5G, Wi-Fi 6E, or UWB despite the small form factor of the computing devices in which the multi-port antenna is utilized.

In order to accomplish such communications simultaneously, a diplexer tuning module is coupled to the multi-port antenna and is configured to separate the first frequency band and the second frequency band via, for example, a splitter circuit housing filters that allow for the first frequency band and the second frequency band to be separated during signal reception but mixed during signal transmission. Such filters can be housed in a first diplexer tuning sub-module associated with the first frequency band and a second diplexer tuning sub-module associated with the second frequency band. Additionally, the diplexer tuning module can include a neutralizing bridge in some embodiments that is configured to isolate signals associated with the first port of the antenna from those associated with the second port of the antenna. Further, each of the first port and the second port of the multi-port antenna can be associated with its own aperture tuning component. The first aperture tuning component associated with the first port is utilized to tune the second frequency band, while the second aperture tuning component associated with the second port is utilized to tune the first frequency band.

The computing device can also include circuity within the housing of the computing device that can include a first matching network associated with the first port and a second matching network associated with the second port of the multi-port antenna, along with a radiofrequency (RF) system for the first frequency band and an RF system for the second frequency band. It should be understood that such matching networks and systems can optimize front-end paths for the two antenna ports and can be located on the main printed circuit board, etc.

The computing device can include a switching device (e.g., a double pole double throw switch) that can selectively couple the first port and/or the second port of the multi-port antenna to a transmission/reception data path simultaneously and any remaining antennas to another wireless reception data path. The one or more controllers can determine a signal strength of a signal received from the switching device (e.g., a signal from one of the internal and external antennas). Additionally, the one or more controllers can receive a signal strength indicating the strength of the other signals (e.g., the signal from the remaining antennas). Based on the received signals, the one or more controllers determines which of antenna or antennas should be used for wireless transmission and/or reception of data from the computing device to other computing devices. For example, the one or more controllers can determine that the multi-port antenna is receiving data more optimally than one of the other antennas. Based on this determination, the one or more controllers can generate a control signal for the switching device to switch to the multi-port antenna for wireless data transmission if, for example, the computing device is currently using the other antenna for wireless data transmission.

By dynamically switching between different antennas, the antenna providing better performance at the frequency band (e.g., low-band LTE) associated with the wireless communication standard for the cellular network can be selected. In this manner, a computing device according to the present disclosure can meet wireless data carrier specifications and provide improved communications on the cellular network, and can even meet wireless data specifications across multiple bands simultaneously from a single multi-port antenna. For instance, all frequency bands associated with the wireless standard (e.g., LTE) for the cellular network can be covered and the dynamic switching capability can be used to select a better antenna for data transmission performance per frequency band which improves user experience when using the wearable computing device. Furthermore, a multi-antenna solution that can include a multi-port antenna as well as additional antennas allows the computing device to combine received wireless data from multiple antennas, which allows for a better total isotropic sensitivity overall for the computing device.

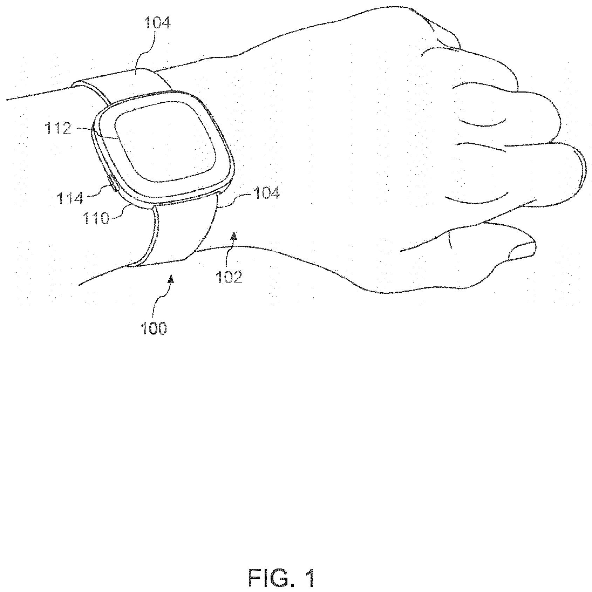

Referring now to the figures, Figs 1-5 depict a computing device 100 in the form of a wearable computing device according to some implementations of the present disclosure, although it is to be understood that the computing device could also be a phone, tablet, or another device requiring communications circuity and an antenna. In particular, FIG. 1 depicts a computing device 100 according to some implementations of the present disclosure in the form of a wearable computing device, and, more specifically, a watch. As shown, the computing device 100 can be worn, for instance, on an arm 102 (e.g., wrist) of a user. For instance, the wearable computing device 100 can include a band 104 and a housing assembly 110. The housing assembly 110 can be coupled to the band 104. In this manner, the band 104 can be fastened to the arm 102 of the user to secure the housing assembly 110 to the arm 102 of the user.

In some implementations, the computing device 100 can include a display 112 that can display content (e.g., time, date, etc.) to the user. In some implementations, the display 112 can include an interactive display (e.g., touchscreen or touch-free). In such implementations, the user can interact with the computing device 100 via the display 112 to control operation of the computing device 100. Alternatively, or additionally, the wearable computing device 100 can include one or more input devices 114 that can be manipulated by the user to interact with the wearable computing device 100. For instance, the one or more input devices 114 can include a mechanical button that can be manipulated (e.g., pressed) to interact with the computing device 100. In some implementations, the one or more input devices 114 can be manipulated to control operation of a backlight (not shown) associated with the display 112. It should be understood that the one or more input device 114 can be configured to allow the user to interact with the computing device 100 in any suitable manner. For instance, in some implementations, the one or more input device 114 can be manipulated by the user to navigate through one or more menus on the display 112.

In some implementations, the computing device 100 can be designed to be worn (e.g., continuously) by the user. When worn, the computing device 100 can gather data regarding activities performed by the user, or regarding the user's physiological state. Such data may include data representative of the ambient environment around the user or the user's interaction with the environment. For example, the data can include motion data regarding the user's movements, ambient light, ambient noise, air quality, etc., and/or physiological data obtained by measuring various physiological characteristics of the user, such as heart rate, perspiration levels, and the like.

In some implementations, the computing device 100 can include one or more input devices 114 that can be manipulated (e.g., pressed) by the user to interact with the computing device 100. For instance, the one or more input devices (e.g., input/output element) 114 can include a mechanical button that can be manipulated (e.g., pressed) to interact with the computing device 100. In some implementations, the one or more input devices 114 can be manipulated to control operation of a backlight (not shown) associated with the display screen 112. It should be understood that the one or more input device 114 can be configured to allow the user to interact with the computing device 100 in any suitable manner. For instance, in some implementations, the one or more input devices 114 can be manipulated by the user to navigate through content (e.g., one or more menu screens) displayed on the display screen 112.

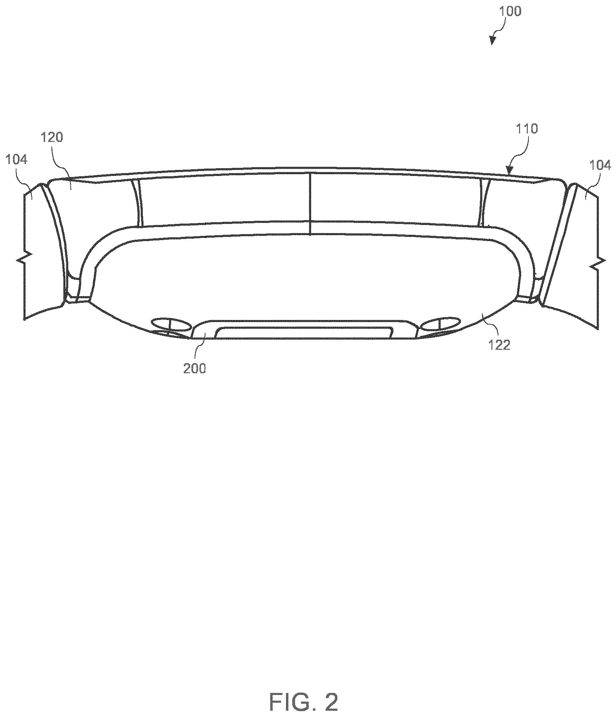

Referring now to FIG. 2, a side view of the housing assembly 110 of the computing device 100 is provided according to some implementations of the present disclosure. As shown, the housing assembly 110 can include a conductive housing 120. The conductive housing 120 can be attached to the band 104 that is used to secure the housing assembly 110 to the arm 102 (FIG. 1) of the user. The housing assembly 110 can include a cover 122 coupled to the conductive housing 120. In some implementations, the cover 122 can be coupled to the bottom of the conductive housing 120. In this manner, the cover 122 can contact (e.g., touch) the arm 102 (FIG. 1) of the user when the housing assembly 110 is secured to the arm 102 of the user via the band 104.

The conductive housing 120 can include any suitable conductive material. For instance, in some implementations, the conductive housing 120 can include a metal housing. The cover 122 can include an insulating material. For instance, in some implementations, the cover 122 can include a plastic cover.

In some implementations, the wearable computing device 100 can include one or more external sensors 200, which can, for instance, be in the form of an electrocardiogram (ECG) electrode or any other optical sensor. As shown, the external sensor 200 can be positioned within an opening (e.g., cutout) defined by the cover 122. In this manner, the external sensor 200 can contact (e.g., touch) the arm 102 (FIG. 1) of the user when the housing assembly 110 is secured to the arm 102 of the user via the band 104. When the external sensor 200 contacts the arm 102 of the user, the external sensor 200 can be electrically connected to the arm 102 (e.g., wrist) of the user. Furthermore, it should be understood that the computing device 100 can determine one or more health metrics (e.g., heart rate) of the user based, at least in part, on data obtained via the external sensor 200 when the external sensor 200 is electrically connected to the arm 102 (e.g., wrist) of the user.

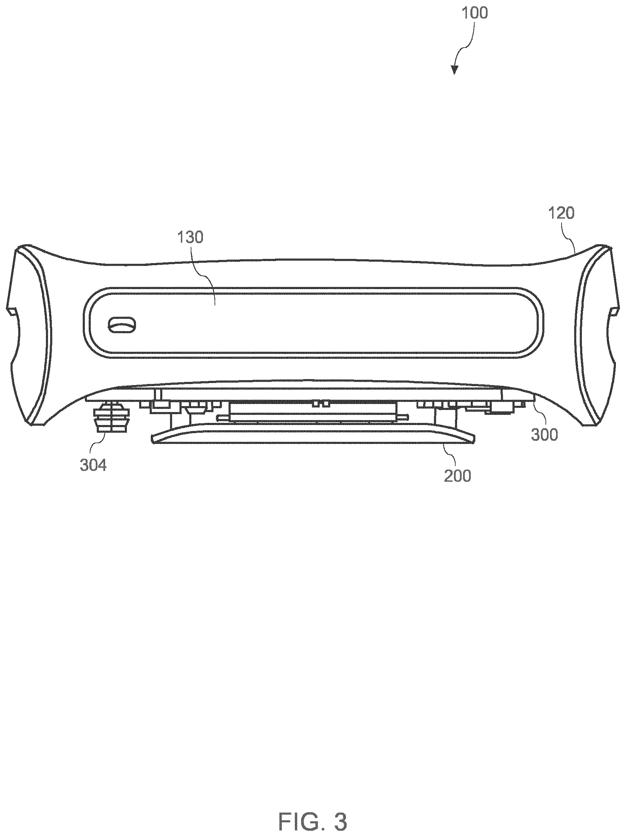

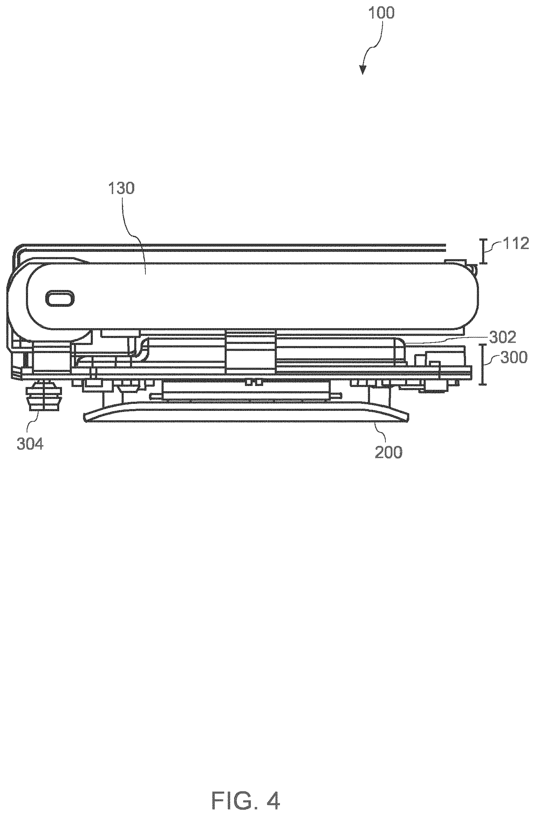

Referring now to FIGS. 3 and 4, a side view of the computing device 100 is provided according to some implementations. FIG. 3 depicts a side view of the computing device 100 with the cover 122 (FIG. 2) removed. FIG. 4 depicts a side view of the wearable computing device 100 without the housing assembly 110 (FIG. 2). As shown, the display 112 can, in some implementations, include a display ITO coating 116 and a touch ITO coating 118.

Referring still to FIGs. 3 and 4, the computing device 100 can include a printed circuit board 300 disposed within the housing assembly 110 (FIG. 2). For instance, in some implementations, a first portion of the printed circuit board 300 can be positioned within the conductive housing 120 and a second portion of the printed circuit board 300 can be positioned within the cover 122. The printed circuit board 300 can include a plurality of electronic components (not shown) disposed thereon. As shown in FIG. 4, in some implementations, the printed circuit board 300 can include a shielding can 302 covering at least a portion of the printed circuit board 300. In this manner, the shielding can 302 can cover one or more electronic components of the plurality of electronic components disposed on the printed circuit board 300. Alternatively, or additionally, the printed circuit board 300 can include one or more charging pins 304. In this manner, the computing device 100 can be coupled to a charging circuit (not shown) via the one or more charging pins 304 to facilitate charging of an energy storage device (e.g., battery) of the computing device 100.

In some implementations, the conductive housing 120 can define an opening (e.g., cutout) for one or more internal sensors 130. In this manner, the one or more internal sensors 130 can be visible to the user. In some implementations, the one or more internal sensors 130 can include at least one of an electrodermal activity (EDA) sensor, an accelerometer, a pressure sensor, a temperature sensor, etc. In such implementations, the one or more internal sensors 130, along with the external sensor 200, can facilitate measuring one or more health metrics (e.g., heart-rate, blood pressure, ECG, EDA etc.) of the user. It should be understood that the one or more internal sensors 130 can be electrically coupled to the printed circuit board 300.

Referring now to FIG. 4, the printed circuit board 300 can be positioned relative to the conductive housing 120 such that a gap 400 is defined between the conductive housing 120 and the printed circuit board 300. The gap 400 can extend around the entire perimeter of the printed circuit board 300. Stated another way, no edge of the printed circuit board 300 can contact (e.g., touch) the conductive housing 120.

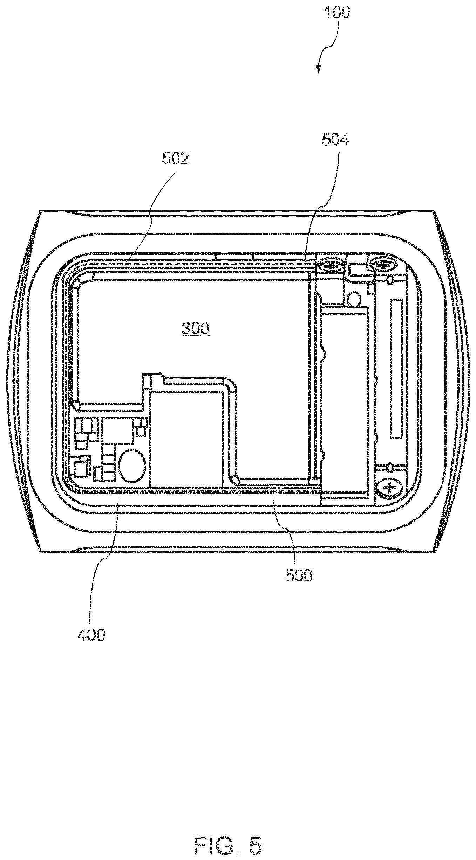

Referring now to FIG. 5, in some implementations, the antenna 500 (denoted by dashed line)can be a two-port antenna in the form of a slot antenna can be defined by a gap 400 between the conductive housing 120 and the printed circuit board 300, although it is to be understood that other antenna types are also contemplated by the present disclosure, including, but not limited to a monopole antenna or a loop antenna. Based on the specific features of the antenna 500, its first port 502, it second port 504, and the various tuning modules and matching circuits associated therewith and as discussed in more detail below, the antenna 500 can be operable at a plurality of different frequency bands simultaneously. For instance, between the first port 502 and the second port 502, the antenna 500 can operate at a first frequency band and a second frequency band, where the first band and/or the second band support a plurality of wireless communication standards including long-term evolution (LTE), Wideband Code Division Multiple Access (WCDMA), global positioning system (GPS), n255, Wi-Fi 2.4, Wi-Fi 5G, Wi-Fi 6E, Bluetooth, and ultra-wideband (UWB) frequency bands. It should be understood however that the two-port antenna 500 can be operable at frequency bands associated with any suitable communication standard. In one particular embodiment, the first frequency band can fall within a range that includes frequencies less than about 3 Gigahertz, and the second frequency band can fall within a range that includes frequencies greater than about 5 Gigahertz.

**In** some implementations, the slot antenna 500 can include at least a port 502 and a second port 504. The first port 502 can be located between the conductive housing 120 and a first location on the perimeter of the printed circuit board 300. Conversely, the second port 504 can be located between the conductive housing 120 and a second location on the perimeter 306 of the printed circuit board 300. **In** some implementations, the first location and the second location can correspond to opposing sides of the printed circuit board 300. It should be understood however that the first port 502 and the second port 504 can be coupled to the perimeter of the printed circuit board 300 at any suitable location to adjust a length of the two-port antenna 500. For instance, the first port 502 and the second port 504 can be positioned closer to one another to shorten the two-port antenna 500. Alternatively, the first port 502 and the second port 504 can be positioned farther apart from one another to lengthen the two-port antenna 500.

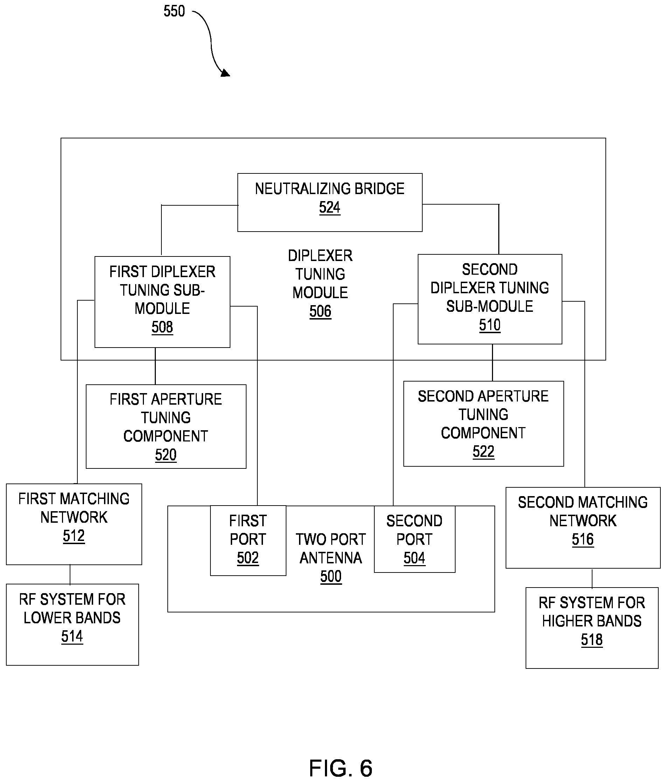

Turning now to FIG. 6, a partial block diagram of the various components and circuity associated with antenna control system 550 of the computing device 100 according to the arrangement of FIGs. 1-5 is illustrated. As shown, the antenna 500 (e.g., a multi-port antenna such as a two-port antenna) has at least a first port 502 and a second port 504 that are coupled to the diplexer tuning module 506. The diplexer tuning module 506 is configured to separate the first frequency band associated with the first port 502 and the second frequency band associated with the second port 504 via, for example, a splitter circuit housing filters that allow for the first frequency band and the second frequency band to be separated during signal reception but mixed during signal transmission. Such filters can be housed in a first diplexer tuning sub-module 508 associated with the first frequency band and first port 502 and a second diplexer tuning sub-module 510 associated with the second frequency band and the second port 504. Additionally, the diplexer tuning module 506 can include a neutralizing bridge 524 in some embodiments that is configured to isolate signals associated with the first port 502 of the antenna 500 from those associated with the second port 504 of the antenna 500. Further, each of the first port 502 and the second port 504 of the antenna 500 can be associated with its own aperture tuning component (e.g., first aperture tuning component 520 and second aperture tuning component 522). The first aperture tuning component 520 associated with the first port 502 is utilized to tune the second frequency band associated with the second port 504, while the second aperture tuning component 522 associated with the second port 504 is utilized to tune the first frequency band associated with the first port 502.

The antenna control system 550 can also include circuity within the housing of the computing device 100 that can include a first matching network 512 associated with the first port 502 and a second matching network 516 associated with the second port 504 of the antenna 500 as shown, along with a radiofrequency (RF) system for lower frequency bands 514 (e.g., the first frequency band) and an RF system for higher frequency bands 518 (e.g., the second frequency band). It should be understood that such matching networks and systems can optimize front-end paths for the first port 502 and the second port 504. All of the aforementioned components associated with the antenna control system 550 can be located on the main printed circuit board in an integrated IC package or on a printed circuit board sub-assembly with discrete components depending on the various applications in which the antenna control system 500 is utilized. In any event, the specific configuration of the antenna control system 550 allows for independent aperture tuning at the first port 502 and the second port 504 for signals associated with the second port 504 and the first port 502, respectively, enabling duplex operation of the antenna 500 to serve lower frequency bands and higher frequency bands simultaneously with high isolation. In essence, the first port 502 and the second port 504 operate independently despite being part of the same antenna 500. In some embodiments, the first port 502 and the second port 504 can be separated in phase by at least 90 degrees and up to 180 degrees to ensure proper isolation of their respective signals.

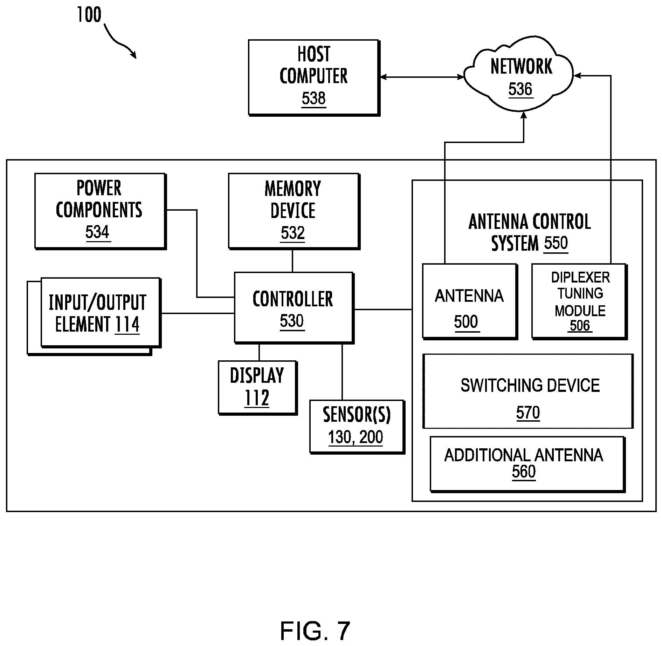

Next, FIG. 7 more broadly depicts a block diagram of components of the computing device 100 including the antenna control system 550 of FIG. 6 according to some implementations of the present disclosure. In particular, as shown, the computing device 100 can include at least one controller 530 that is communicatively coupled to the antenna control system 550 and that is also communicatively coupled to various internal sensors 130 and/or external sensor 200 utilized on the device. Moreover, in an embodiment, the controller(s) 530 may be a central processing unit (CPU) or graphics processing unit (GPU) for executing instructions that can be stored in a memory device 532, such as flash memory or DRAM, among other such options. For example, in an embodiment, the memory device 532 may include RAM, ROM, FLASH memory, or other non-transitory digital data storage, and may include a control program comprising sequences of instructions which, when loaded from the memory device 532 and executed using the controller(s) 530, cause the controller(s) 530 to perform the functions that are described herein.

As would be apparent to one of ordinary skill in the art, the computing device 100 can include many types of memory, data storage, or computer-readable media, such as data storage for program instructions for execution by the controller or any suitable controller or processor. The same or separate storage can be used for images or data, a removable memory can be available for sharing information with other devices, and any number of communication approaches can be available for sharing with other devices. In addition, as shown, the computing device 100 includes the display screen 112, which may be a touch screen, organic light emitting diode (OLED), or liquid crystal display (LCD), although devices might convey information via other means, such as through audio speakers, projectors, or casting the display or streaming data to another device, such as a mobile phone, wherein an application on the mobile phone displays the data.

The computing device 100 also includes one or more power components 534, such as may include a battery operable to be recharged through conventional plug-in approaches, or through other approaches such as capacitive charging through proximity with a power mat or other such device. In further embodiments, the computing device 100 can also include at least one additional input device or input output element 114 able to receive conventional input from a user. This conventional input can include, for example, a push button, touch pad, touch screen, wheel, joystick, keyboard, mouse, keypad, or any other such device or element whereby a user can input a command to the computing device 100. In another embodiment, the input device or input output element 114 may be connected by a wireless infrared or Bluetooth or other link as well in some embodiments. In some embodiments, the computing device 100 may also include a microphone or other audio capture element that accepts voice or other audio commands. For example, in particular embodiments, the computing device 100 may not include any buttons at all, but might be controlled only through a combination of visual and audio commands, such that a user can control the computing device 100 without having to be in contact therewith. In certain embodiments, the input device or input output element 114 may also include one or more sensor(s) 200 such as optical sensors, barometric sensors (e.g., altimeter, etc.), and the like.

In an embodiment, the computing device 100 can communicate with one or more external or host computers 538 over one or more networks 536 via, for example, the multi-port (e.g., two-port) antenna 500, one or more additional antennas 560, and/or other wireless communication components.

The computing device 100 can also include the antenna control system 550, which can include the antenna 500 (e.g., a multi-port antenna, such as a two-port antenna), the diplexer tuning module 506, and the associated components discussed above with respect to FIG. 6, one or more additional antennas 560, and an optional switching device 570. As mentioned above, the antenna 500 can communicate across at least two communication frequencies (e.g., two frequency bands) simultaneously, such as the at least two frequency bands associated with one or more of wide area networks and local area networks, including long term evolution (LTE), Wideband Code Division Multiple Access (WCDMA), GPS, n255, 2.4, Wi-Fi 5G, Wi-Fi 6E, Bluetooth, or ultra-wideband (UWB).

It should be understood that the antenna control system 550 can be electrically coupled to a wireless data reception path and the one or more processors or controllers 530. Generally, the antenna control system 550 can receive signals from various communication paths associated with the antenna 500 and optionally one or more additional antennas 560. Further, the antenna control system 550 can determine the signal strength of various signals and provide the signal strengths to the one or more processors or controllers 530 for comparison to determine which signal is optimal for a given function and then the one or more processors or controllers 530 can generate a control signal for the switching device 570, which can then disconnect whichever antenna is currently connected to the communication path and connect the antenna associated with the optimal signal to the communication path, which can be the antenna 500 (which can handle two signals simultaneously as describe above due to the isolation between the signals associated with the first port 502 and second port 504) or the one or more additional antennas 560.

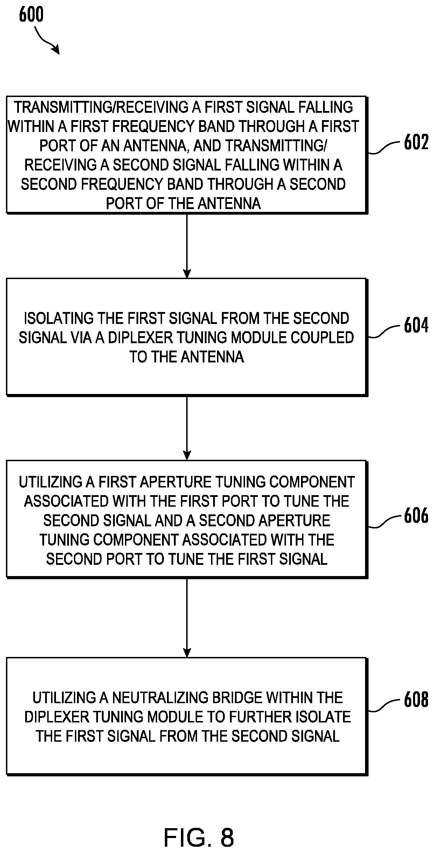

Next, FIG. 8 depicts a flow diagram of a method for utilizing a single antenna of a computing device to receive and transmit communication signals simultaneously across at least a first frequency band and a second frequency band that is different from the first frequency band according to some implementations of the present disclosure. The method 600 may be implemented using, for instance, the antenna control system 550 discussed above with reference to FIGs. 6 and 7. In step 602, the method includes transmitting and/or receiving a first signal falling within a first frequency band through a first port of an antenna and transmitting and/or receiving a second signal falling within a second frequency band through a second port of the antenna. In step 604, the method also includes isolating the first signal from the second signal via a diplexer tuning module coupled to the antenna. Additionally, in step 606, the method also includes utilizing a first aperture tuning component associated with the first port to tune the second signal and a second aperture tuning component associated with the second port to tune the first signal. Lastly, in step 808, the method can include utilizing a neutralizing bridge within the diplexer tuning model to further isolate the first signal from the second signal. Further, although FIG. 8 depicts steps performed in a particular order for purposes of illustration and discussion, those of ordinary skill in the art, using the disclosures provided herein, will understand that various steps of the method 600 or any of the other methods disclosed herein may be adapted, modified, rearranged, performed simultaneously, eliminated, or modified in various ways without deviating from the scope of the present disclosure.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A wearable computing device comprising:
a housing;
a display positioned within the housing;
a circuit board positioned within the housing, the circuit board electrically coupled to the display;
an antenna positioned within the housing, the antenna including:
a first port configured to facilitate communication of the antenna over a first frequency band; and
a second port configured to facilitate communication of the antenna over a second frequency band;
a diplexer tuning module configured to separate the first frequency band and the second frequency band;
a first aperture tuning component associated with the first port, wherein the first aperture tuning component facilitates tuning of the second frequency band; and
a second aperture turning component associated with the second port, wherein the second aperture tuning component facilitates tuning of the first frequency band.

2. The wearable computing device of claim 1, wherein the first frequency band falls within a range that includes frequencies less than about 3 Gigahertz, and wherein the second frequency band falls within a range that includes frequencies greater than about 5 Gigahertz.

3. The wearable computing device of claim 1 or 2, wherein the antenna is configured to communicate over the first frequency band and the second frequency band simultaneously.

4. The wearable computing device of any one of claims 1 to 3, wherein the first frequency band and the second frequency band support a plurality of wireless communication standards, wherein the plurality of wireless communication standards include long-term evolution (LTE), Wideband Code Division Multiple Access, WCDMA, global positioning system (GPS), n255,Wi-Fi 2.4, Wi-Fi 5G, Wi-Fi 6E, Bluetooth, and ultra-wideband, UWB.

5. The wearable computing device of claim 4, wherein the first frequency band supports communication via LTE, WCDMA, GPS, Bluetooth, n255, or Wi-Fi 2.4 and/or the second frequency band supports communication via Wi-Fi 5G, Wi-Fi 6E, or UWB.

6. The wearable computing device of any one of the preceding claims, wherein the diplexer tuning module includes a first diplexer tuning sub-module associated with the first port and the first frequency band and a second diplexer tuning module associated with the second port and the second frequency band.

7. The wearable computing device of any one of the preceding claims, further comprising a neutralizing bridge configured to isolate signals associated with the first port from signals associated with the second port and/or further comprising a first matching circuit associated with the first port and a second matching circuit associated with the second port .

8. The wearable computing device of claim 1, wherein the antenna is a slot antenna, a monopole antenna, or a loop antenna.

9. The wearable computing device of claim 1, further comprising one or more electrodes for measuring a biometric parameter of a user.

10. A computing device comprising:
a housing;
a display positioned within the housing;
a circuit board positioned within the housing, the circuit board electrically coupled to the display;
an antenna positioned within the housing, the antenna including:
a first port configured to facilitate communication of the antenna over a first frequency band; and
a second port configured to facilitate communication of the antenna over a second frequency band;
a diplexer tuning module configured to separate the first frequency band and the second frequency band;
a first aperture tuning component associated with the first port, wherein the first aperture tuning component facilitates tuning of the second frequency band; and
a second aperture turning component associated with the second port, wherein the second aperture tuning component facilitates tuning of the first frequency band.

11. The computing device of claim 10, wherein the first frequency band falls within a range that includes frequencies less than about 3 Gigahertz, and wherein the second frequency band falls within a range that includes frequencies greater than about 5 Gigahertz.

12. The computing device of claim 10 or 11, wherein the antenna is configured to communicate over the first frequency band and the second frequency band simultaneously.

13. The computing device of any one of claims 10 to 12, wherein the first frequency band and the second frequency band support a plurality of wireless communication standards, wherein the plurality of wireless communication standards include long-term evolution, LTE, Wideband Code Division Multiple Access, WCDMA, global positioning system, GPS, n255,Wi-Fi 2.4, Wi-Fi 5G, Wi-Fi 6E, Bluetooth, and ultra-wideband, UWB, wherein, optionally, the first frequency band supports communication via LTE, WCDMA, GPS, n255, Bluetooth, or Wi-Fi 2.4 and/or wherein the second frequency band supports communication via Wi-Fi 5G, Wi-Fi 6E, or UWB.

14. The computing device of any one of claims 10 to 13, wherein the diplexer tuning module includes a first diplexer tuning sub-module associated with the first port and the first frequency band and a second diplexer tuning module associated with the second port and the second frequency band.

15. The computing device of any one of claims 10 to 14, further comprising a neutralizing bridge configured to isolate signals associated with the first port from signals associated with the second port and/or comprising a first matching circuit associated with the first port and a second matching circuit associated with the second port.
